# EUROPEAN PATENT APPLICATION

(11) **EP 4 531 419 A1**
(43) Date of publication of application: **02.04.2025**
(21) Application number: 22946758.4
(22) Date of filing: 14.06.2022
(51) Int. Cl.: H04Q 9/00

(54) **CONTROL/MONITOR SIGNAL TRANSMISSION SYSTEM**

(71) Applicant: Anywire Corporation, Nagaokakyo-shi, Kyoto 617-8550 (JP)
(72) Inventor: TANAKA, Yasunori, Nagaokakyo-shi, Kyoto 617-8550 (JP); HAMANAKA, Junichi, Nagaokakyo-shi, Kyoto 617-8550 (JP); SUGAYA, Tsutomu, Nagaokakyo-shi, Kyoto 617-8550 (JP)
(74) Representative: Gulde & Partner
(86) International application number: PCT/JP2022/023739
(87) International publication number: WO 2023/242938

(57) **Abstract**

A master station that transmits and receives data to and from a control part, and a plurality of remote stations that transmit and receive data to and from the master station by a transmission synchronization method via a common transmission line are comprised. Transmitting and receiving data between the master station and the remote stations is performed by superimposing data on a frame repeatedly transmitted from the master station. A transmission clock signal for synchronizing the master station and the remote station is composed of a plurality of clock pulses, each of the clock pulses has a data pulse used for data transmission of the master station and the remote station, the data pulse is allocated to each of the remote stations, for each of the remote stations, a numerical value as an address for obtaining the timing of the data pulse allocated to the own station is set. The data pulse is time-divided into a plurality of ranges, and at least one of the ranges is a changeable range that can be used for both data transmission from the master station and data transmission from the remote station.

## Description

### TECHNICAL FIELD

The present invention relates to a control and monitoring signal transmission system wherein a signal line between a master station provided on a control side and a plurality of remote stations provided on a controlled side is reduced in wiring, connected by a common transmission line, and data is transmitted by a transmission synchronization method such as synchronizing with a transmission clock.

In a system for centrally controlling a large number of devices arranged in a facility, a so-called wiring saving, in which the number of wirings is reduced, is widely implemented. Then, as a general method of the wiring saving, to replace the parallel connection directly connecting each of a plurality of devices provided on the controlled side to the control unit provided on the control side, it has been widely adopted a system wherein a master station and a plurality of remote stations having a conversion function of a parallel signal and a serial signal, respectively connected to the control unit and a plurality of devices, and, the master station and a plurality of remote stations perform transmitting and receiving data by using a serial signal via a common transmission line between a plurality of remote stations..

As a method of transmitting and receiving data by using a serial signal via a common transmission line, a transmission synchronization method such as synchronizing with a transmission clock is known. A method of transmitting and receiving data between a master station and a plurality of remote stations by synchronizing data using a series pulse signal (hereinafter referred to as a "transmission clock signal") is widely adopted.

In a method of transmitting and receiving data in synchronization with a transmission clock signal, a frame repeatedly transmitted from a master station is time-divided, a data range wherein a data transmission direction (transmission from a master station to a remote station or transmission from a remote station to a master station) is determined is allocated to each of a plurality of remote stations, and data is superimposed on the data range. Further, the address of the numerical representation for obtaining the timing of the data range allocated to the own station is set in each remote station, each of the plurality of remote stations by transmitting and receiving data to and from the master station in the data range allocated to the own station, it is possible to prevent collision of transmission and reception of a plurality of remote stations.

As an example of such transmitting and receiving data, a control and monitoring signal transmission system proposed in JP-A-2002-152864 can be cited

### PRIOR ART DOCUMENTS

### PATENT DOCUMENT

[Patent Document 1] JP-A-2002-152864

### SUMMARY OF THE INVENTION

### PROBLEM TO BE SOLVED BY THE INVENTION

In the conventional system wherein the master station and the remote station synchronize with each other by the transmission clock signal and transmit and receive data, there is a restriction on the number of clocks of the transmission clock signal due to the configuration of the system, and the number of data ranges (control data ranges) used for data transmission from the master station to the remote station and the number of data ranges (monitoring data ranges) used for data transmission from the remote station to the master station are made to be the same.

Therefore, if there is a difference between the number of control data ranges and the number of monitoring data ranges required for data transfer between the master station and the remote station, the number of clocks of the transmission clock signal becomes unnecessarily large, whereby the frame becomes redundant, there is a problem that the response speed is reduced.

For example, if only one of the number of control data ranges or the number of monitoring data ranges required in transmitting and receiving data between the master station and the remote station exceeds 128, the number of clocks of the transmission clock signal must be 256, and the response speed is half that in the case of using the transmission clock signal having the number of clocks of 128.

Therefore, an object of the present invention is to provide a control and monitoring signal transmission system capable of dealing with the number of control data ranges and the number of monitoring data ranges required for transmitting and receiving data between a master station and a remote station without being restricted by the number of clocks of a transmission clock signal for the master station and the remote station to synchronize with each other without decreasing the response speed.

### MEANS FOR SOLVING THE PROBLEMS

A control and monitoring signal transmission system according to the present invention comprises a master station that transmits and receives data to and from a control part, and a plurality of remote stations that transmit and receive data to and from the master station by a transmission synchronization method via a common transmission line. Transmitting and receiving data between the master station and the remote stations is performed by superimposing data on a frame repeatedly transmitted from the master station. A transmission clock signal for synchronizing the master station and the remote station is composed of a plurality of clock pulses, each of the clock pulses has a data pulse used for data transmission of the master station and the remote station, the data pulse is allocated to each of the remote stations, for each of the remote stations, a numerical value as an address for obtaining the timing of the data pulse allocated to the own station is set. The data pulse is time-divided into a plurality of ranges, and at least one of the ranges is a changeable range that can be used for both data transmission from the master station and data transmission from the remote station.

A management data range wherein all of the remote stations can be used may be provided in the frame, the master station may transmit, using the management data range, instruction data indicating one of a first state wherein the changeable range is used for data transmission from the master station and a second state wherein the changeable range is used for data transmission from the remote station, and the remote station may transmit and receive data corresponding to the instruction data.

A management data range wherein all of the remote stations can be used may be provided in the frame, the master station may transmit instruction data indicating one of a first state wherein the changeable range is used for data transmission from the master station and a second state wherein the changeable range is used for data transmission from the remote station by specifying one of the addresses using the management data range, and the remote station may transmit and receive data corresponding to the instruction data in case where the specified address matches the own address.

A management data range wherein all of the remote stations can be used may be provided in the frame, the master station may transmit instruction data indicating one of a first state wherein the changeable range is used for data transmission from the master station and a second state wherein the changeable range is used for data transmission from the remote station by specifying one of the addresses using the management data range, and the remote station may transmit and receive data corresponding to the instruction data in case where the specified address matches the own address.

A management data range wherein all of the remote stations can be used may be provided in the frame, and the master station may collect information on data to be received by the remote station from the master station and data to be transmitted to the master station by specifying the address for each of the remote stations using the management data range, basing on the information, determine either of a first state wherein the changeable range is used for data transmission from the master station or a second state wherein the changeable range is used for data transmission from the remote station for each of the changeable range of the data pulses, and transmit instruction data indicating either the first state or the second state by specifying the address using the management data region, and the remote station transmits and receives data corresponding to the instruction data in case where the designated address matches the own address.

### EFFECT OF THE INVENTION

According to the present invention, a data pulse on which data transmitted from a master station and data transmitted from a remote station are to be superimposed is time-divided into a plurality of ranges, and at least one of the ranges is a changeable range that can be used for both data transmission from the master station and data transmission from the remote station, whereby the changeable region can be used as a region that requires a large amount in case where there is a difference between the number of control data ranges and the number of monitoring data ranges required for data transfer between the master station and the remote station. Therefore, the number of control data ranges and the number of monitoring data ranges required for data exchange between the master station and the remote station can be dealt with without decreasing the response speed without being restricted by the number of clocks of the transmission clock signal.

### BRIEF DESCRIPTION OF THE FIGURES

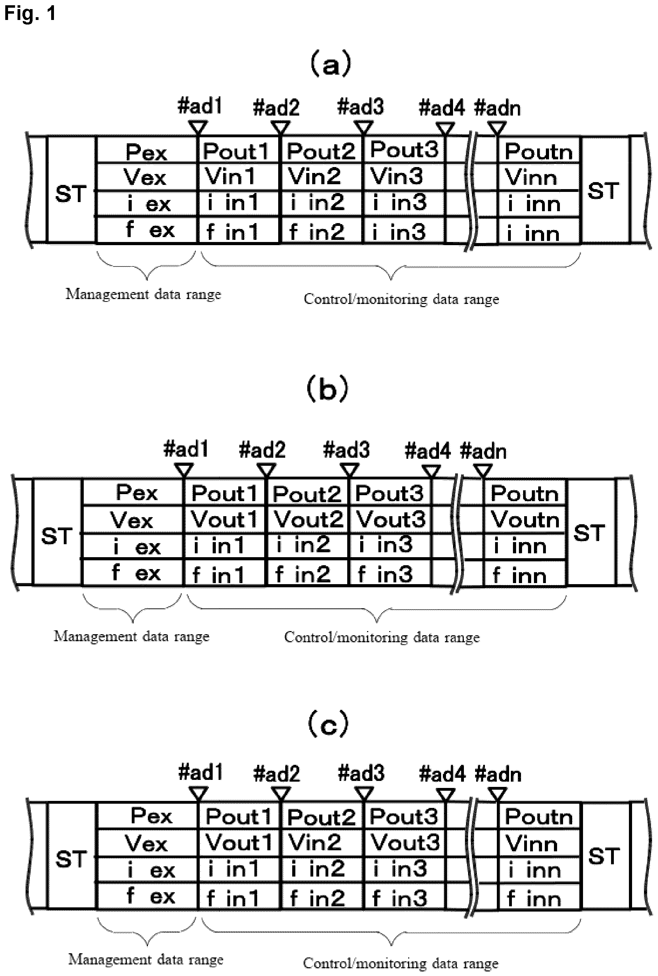

[Fig. 1] Showing the transmission procedure of the transmission signal in the embodiment of the control and monitoring signal transmission system according to the present invention, (a) is a schematic diagram in the case of using all of the changeable ranges to the data transmission from the remote station, (b) is a schematic diagram in the case of using all of the changeable ranges to the data transmission from the master station, (c) is a schematic diagram in the case of using a part of the changeable ranges to the data transmission from the master station, the other part to the data transmission from the remote station.
[Fig. 2] It is a system configuration diagram of the embodiment.
[Fig. 3] It is a functional block diagram of the master station.
[Fig. 4] It is a time chart of a transmission signal.
[Fig. 5] It is a functional block diagram of the input remote station.
[Fig. 6] It is a functional block diagram of the output remote station.
[Fig. 7] It is a time chart of the transmission signal in another embodiment of the control and monitoring signal transmission system according to the present invention.

### DESCRIPTION OF EMBODIMENTS

Embodiments of a control and monitoring signal transmission system according to the present invention will be described.

This control and monitoring signal transmission system is for centrally controlling a large number of devices arranged in a facility such as a factory in a control unit. As illustrated in FIG 1, it is configured with a master station 2 connected to a control unit 1 and a common-data-signal line DP, DN (hereinafter referred to as a transmission line), a plurality of input remote stations 4, output remote stations 5 and input/output remote stations 6 arranged in a facility to be controlled and connected to a transmission line. In FIG 1, for convenience of illustration, each remote station is shown one by one, but the type and numbers of remote stations connected to the transmission line are not limited. Further, for convenience of illustration, all of the remote stations configuring the system are not shown in FIG 1.

The input part 7 to which the input remote station 4 is connected, the output part 8 to which the output remote station 5 is connected, and the input/output part 9 to which the input/output remote station 6 is connected are devices arranged in a facility to be controlled.

Examples of the input part 7 include, but are not limited to, a reed switch, a micro switch, a push button switch, a photoelectric switch, and various other sensors.

Examples of the output part 8 include, but are not limited to, an actuator, a (stepping) motor, a solenoid, a solenoid valve, a relay, a thyristor, and a lamp.

The input/output part 9 is a device having the functions of both the input part 7 and the output part 8. For example, a device such as a temperature controller, a timer, and a counter that has both a function of transmitting information to the master station 2 and a function of performing an output operation based on data transmitted from the master station 2 can be cited.

The input part 7 may be an input part integrated remote station 70 integrated with the input remote station 4. Further, the output unit 8 may be an output part integrated remote station 80 integrated with the output remote station 5.

The control unit 1 includes a management determining part 11 having an arithmetic processing function and an input/output unit 12. The management determining part 11 receives data from the master station 2 via the input/output unit 12, and performs necessary arithmetic processing based on a program stored therein.

### <Master station configuration>

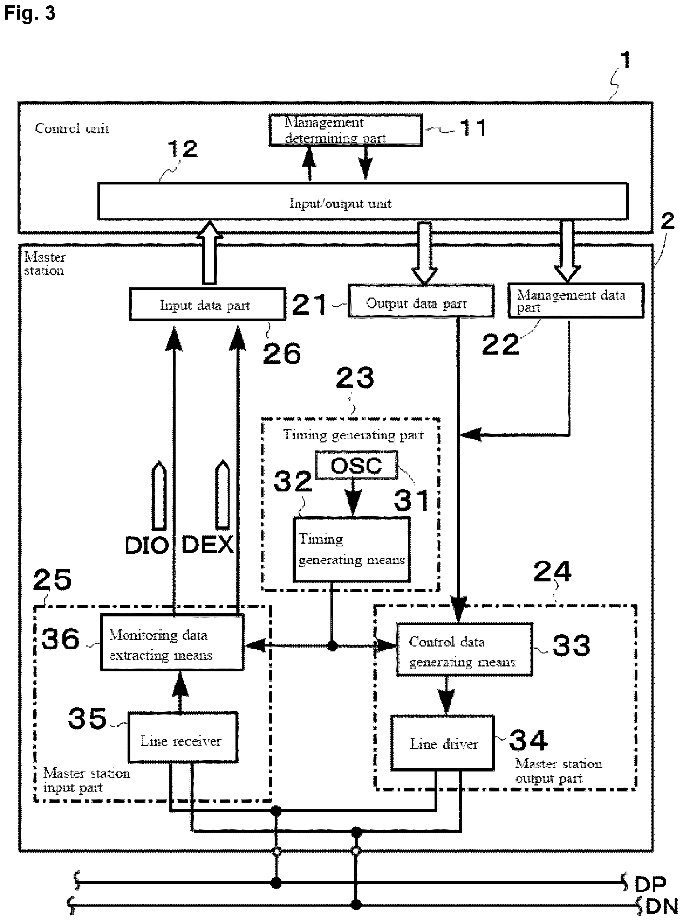

The master station 2 is connected to a transmission line, and as shown in FIG 3, includes an output data part 21, a management data part 22, a timing generating part 23, a master station output part 24, a master station input part 25, and an input data part 26. Then, the control data is output as it is included in the voltage clock signal having a predetermined cycle and duty ratio, and the monitoring data output from the input remote station 4, the output remote station 5 and the input/output remote station 6 (hereinafter, these may be collectively referred to as "child stations 4, 5, and 6.") is extracted, and is output to the input/output unit 12 of the control unit 1.

The output data part 21 passes the data received from the control unit 1 as serial data to the master station output part 24.

Basing on the data received from the control unit 1, the management data part 22 passes data necessary for instruction by a management control data range to the remote station, as serial data, to the master station output part 24, which range is to be described later.

The timing generating part 23 is composed of an oscillation circuit (OSC) 31 and timing generating means 32, timing generating means 32 generates a timing clock of the system basing on the oscillation circuit (OSC) 31 and passes the generated timing clock to the master station output part 24 and the master station input part 25.

The master station output part 24 is composed of a control data generating means 33 and a line driver 34. The control data generating means 33 outputs a transmission signal wherein control data is superimposed on voltage clock signal via the line driver 34 basing on the data received from the output data part 21 and the timing clock received from the timing generating part 23.

In this embodiment, a voltage clock signal is used as the transmission clock signal, which conveys the timing clock using a change in voltage. However, the method of transmitting the timing clock is not limited, and other methods suitable for use conditions may be used.

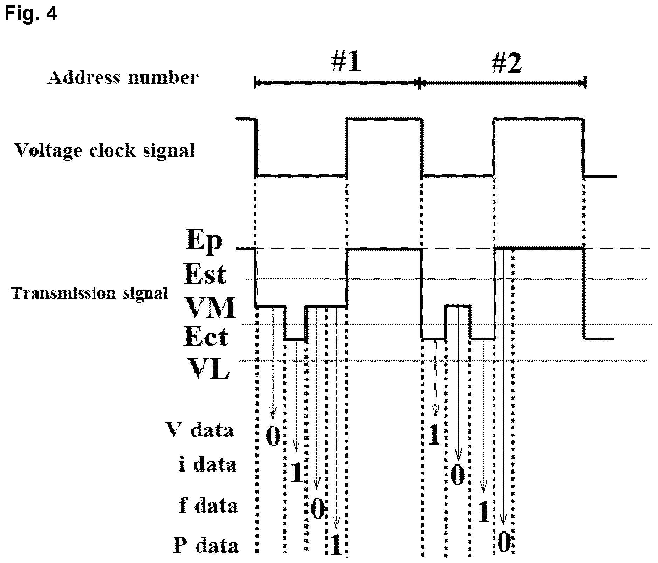

The voltage clock signal is composed of a plurality of clock pulses. Each of the clock pulses has a period (hereinafter, referred to as a "high period") wherein the voltage level is Ep being higher than the threshold Est, as in the transmission signal illustrated in FIG 4. In this embodiment, the voltage level Ep is set to +24V.

Although the high period functions as a synchronous clock and a power supply voltage for communication, the width and the voltage level are not limited to this embodiment as long as they satisfy these conditions. It can be determined as appropriate according to the use environment and the use state. For example, the voltage level may be a negative voltage being maintained lower than the ground level for a predetermined period of time.

Each of the clock pulses also has a data pulse to be used for data transmission between the master station 2 and the remote stations 4, 5, 6.

In this embodiment, the data value is indicated by the voltage level in each of the data pulses. However, the voltage level indicating the data value can be appropriately determined in accordance with the use environment and the use state. For example, the voltage level may be a negative voltage being lower than the ground level.

Each of the data pulses is time-divided into four ranges. **In** the following description, the four ranges in the data pulse, in order close to the timing of the voltage level dropping from the voltage level Ep of the high period, V range, i range, f range, and P range.

The V range of this embodiment corresponds to the changeable region of the present invention and can be used for both data transmission from the master station 2 and data transmission from the remote stations 4, 5, and 6. In this embodiment, the I range and the f range are used only for data transmission from the remote stations 4, 5, and 6, and the P range is used only for data transmission from the master station 2.

Note that the V range, the i range, the f range, and the P range can be selectively used according to the situation. Specifically, any one of the V range, the i range, the f range, and the P range may be used as the changeable range, or any one of the ranges may be used for data transmission from the remote station and data transmission from the master station, or a plurality of changeable ranges may be provided. However, in this embodiment, it is preferable that the P range including the rising of the high period is used in a mode wherein the high period becomes longer considering that the high period functions as the synchronous clock and the power supply voltage for communication.

In this embodiment, in any of the V range, the i range and the f range, a voltage potential VL lower than the threshold value Ect is set as the voltage level to indicate the logical data value "1". Then the voltage potential VM higher than the threshold value Ect is set as the voltage level to indicate the logical data value "0". Further, in this embodiment, the threshold Ect is set (approximately 6V) between 10V and the ground level, but the potential thereof is not limited, and may be set according to the use state or the use environment. The correspondence relationship between the voltage level to indicate the data value and the logical data value is not limited, and can be appropriately determined according to the use environment and the use state.

In the P range of this embodiment, a voltage potential lower than the threshold value Est is set as the voltage level to indicate the logical data value "1". Then the voltage potential higher than the threshold value Est is set as the voltage level to indicate the logical data value "0". Further, as same as in V range, the i range and the f range, the correspondence relationship between the voltage level to indicate the data value and the logical data value is not limited, and can be appropriately determined according to the use environment and the use state.

The voltage clock signal is repeatedly transmitted from the master station 2 using a series of lengths of a predetermined number of high periods as one frame. As shown in FIG 1, a management data range and a control/monitoring data range are provided in one frame.

Further, a start signal ST wherein the voltage level Ep of the high period is maintained for a longer period than the high period is transmitted to the head of the frame, and the frames are separated from each other. The length of the start signal ST is not limited as long as it can be distinguished from the high period, and can be appropriately determined in view of the use conditions and the like.

In the control/monitoring data range, a predetermined range is allocated to each of the input remote station 4, the output remote station 5, and the input/output remote station 6. Then, the control data for the output remote station 5 and the input/output remote station 6 from the master station 2 is superimposed on the range allocated to the target remote station, or the monitoring data for the master station 2 from the input remote station 4 and the input/output remote station 6 is superimposed on the range allocated to the remote station transmitting the monitoring data. The control/monitoring data range is used for transmitting and receiving the steady data between the master station 2 and the remote stations 4, 5, and 6 as described.

The management data range is used for transmitting and receiving non-stationary data that cannot be transmitted and received by using the control/monitoring data range. The instruction data of the present invention are transmitted using the management data range, and details of the transmission procedure will be described later.

The master station input part 25 is composed of a line receiver 35 and a monitoring data extracting means 36. The line receiver 35 receives the voltage clock signal from the transmission line, performs waveform shaping, and passes it to the monitoring data extracting means 36.

The monitoring data extracting means 36 obtains timing for extracting a data value using the timing clock received from the timing generating part 23, and extracts data basing on the digital value of the voltage level of the voltage clock signal received from the line receiver 35. Then, it passes the steady data DIO superimposed on the control/monitoring data range and the management data DEX superimposed on the management data range to the input data part 26.

The input data part 26 converts the serial input data received from the monitoring data extracting means 36 into parallel data, and outputs the parallel data as monitoring data and management monitoring data to the input/output unit 12 of the control unit 1.

### <Input remote station configuration>

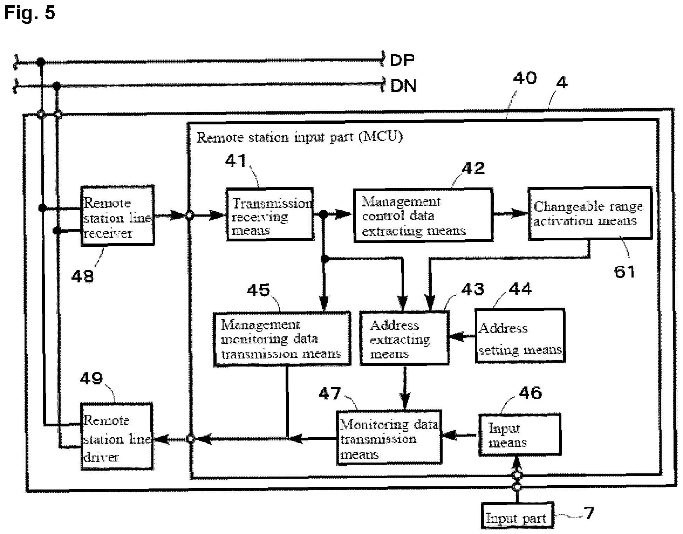

As shown in FIG. 5, the input remote station 4 comprises a remote station input part 40 for executing main arithmetic processing, and a remote station line receiver 48 and a remote station line driver 49 disposed between the remote station input part 40 and the transmission line, receives a voltage clock signal from the transmission line via the remote station line receiver 48, and outputs a monitoring signal to the transmission line via the remote station line driver 49.

The remote station input part 40 has a transmission receiving means 41, a management control data extracting means 42, an address extracting means 43, an address setting means 44, a management monitoring data transmission means 45, an input means 46, a monitoring data transmission means 47, and a changeable range activation means 61.

Incidentally, the input remote station 4 of this embodiment comprises a MCU which is a microcomputer control unit as an internal circuit, and this MCU functions as the remote station input part 40.

The remote station line receiver 48 receives a transmission signal from the transmission line, performs waveform shaping, and passes the signal to the transmission receiving means 41.

The transmission receiving means 41 determines the voltage level comparing to the threshold Est and the threshold Ect, and passes the digital value of the voltage level of the transmission signal, which digital value is received from the remote station line receiver 48, to the management control data extracting means 42, to the address extracting means 43, and to the management monitoring data transmission means 45.

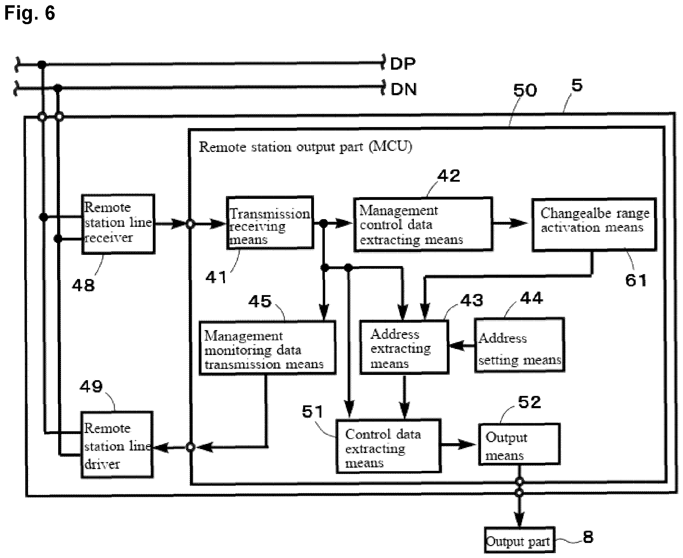

The management control data extracting means 42 determines the start signal ST basing on the digital value of the voltage level of the transmission signal. Then, starting from the timing wherein the start signal ST ends (falling edge in this embodiment), the control data is extracted basing on the digital value of the voltage level of the data I/O range in the management data range. The extracted management data is passed over to processing means wherein processes basing on the data are executed. In FIG 6, a changeable range activation means 61 is shown as a processing means in case where the instruction data is management data, but the illustration of other processing means is omitted.

The address extracting means 43 determines the start signal ST basing on the digital value of the voltage level of the transmission signal, and counts the high period starting from the timing wherein the start signal ST ends (falling edge in this embodiment). Then, a timing wherein the count value matches the own station address data set by the address setting means 44 is obtained. Note that this timing is a timing (hereinafter, referred to as "own station range start timing") wherein the data range allocated to the own station in the control/monitoring data range (hereinafter, referred to as "own station range") starts.

Further, the address extraction unit 43 obtains timings of the V range, the i range, and the f range based on the elapsed time starting from the falling edge of the high period.

Then, the address extracting unit 43 having obtained the own station range start timing enables the monitoring data transmission means 47 in the period of the i range and the f range allocated to the own station, and in the period of the V range in the case where the signal indicating the activation of the V range is output by the changeable range activation unit 61. **In** the case where the own station range is composed of a plurality of data pulses, the monitoring data transmission unit 47 is enabled every time the i range and the f range allocated to the own station and the V range activated appear until the own station range ends.

The management monitoring data transmission means 45 determines the start signal ST basing on the digital value of the voltage level of the transmission signal. Then, starting from the timing wherein the start signal ST ends, it outputs a monitoring data required in the management data range.

Note that the monitoring data output from the management monitoring data transmission means 45 is transmitted only in the case where a data to be transmitted to the master station 2 is received from processing means.

The input means 46 passes the data basing on the input from the input part 7 to the monitoring data transmission means 47.

The monitoring data transmission means 47 outputs the data received from the input means 46 as a monitoring data via the remote station line driver 49 in the case where being enabled by the address extracting means 43.

In the case where the instruction data is received from the management control data extracting means 42, the changeable range activation means 61 outputs a signal indicating the activation of the V range to the address extracting means 43 if the instruction data indicates a second state (a state wherein the changeable range is used for data transmission from the remote stations 4, 5, and 6).

### <Output remote station configuration>

As shown in FIG. 6, the output remote station 5 comprises a remote station output part 50 for executing main arithmetic processing, and a remote station line receiver 48 and a remote station line driver 49 disposed between the remote station output part 50 and the transmission line, receives a transmission signal from the transmission line via the remote station line receiver 48, and outputs information basing on a control data to the output part 8 for operating or stopping the output part 8. Further, in the case where receiving and sending data using management range are required, it sends the monitoring data via the remote station line driver 49. In FIG 6, substantially the same parts as those of the input remote station 4 are denoted by the same reference numerals, and the description thereof will be simplified or omitted.

The remote station output part 50 has a transmission receiving means 41, a management control data extracting means 42, an address extracting means 43, an address setting means 44, a management monitoring data transmission means 45, a control data extracting means 51, an output means 52 and a changeable range activation means 61.

Similarly to the input remote station 4, the output remote station 5 of this embodiment also comprises a MCU which is a microcomputer control unit as an internal circuit, and this MCU functions as the remote station output part 50.

The transmission receiving means 41 of the output remote station 5 passes the digital value of the voltage level of the transmission signal received from the remote station line receiver 48 to the management control data extracting means 42, to the address extracting means 43, to the management monitoring data transmission means 45, and to the control data extracting means 51.

The address extracting means 43 of the output remote station 5 obtains the own station range start timing and the timings of the V range and the P range. Then, the address extracting means 43 having obtained the own station range start timing enables the control data extracting means 51 in the period of the P range allocated to the own station and in the period of the V range in the case where the signal indicating the activation of the V range is output by the changeable range activation means 61. In the case where the own station range is composed of a plurality of data pulses, the control data extracting means 51 is enabled for each time the P range allocated to the own station and the activated V range appear until the own station range ends.

In case being enabled by the address extracting means 43, the control data extracting means 51 extracts the control data basing on the digital value of the voltage level of the transmission signal received from the transmission receiving means 41 and passes the control data to the output means 52,

The output means 52 outputs information basing on the control data received from the control data extracting means 51 to the output part 8, and operates or stops the output part 8.

In the case where the instruction data is received from the management control data extracting means 42, the changeable range activation means 61 of the output remote station 5 outputs a signal indicating the activation of the V range to the address extracting means 43 if the instruction data indicates a first state (a state wherein the changeable range is used for data transmission from the master station 2).

### <Input/output remote station configuration>

The input/output remote station 6 has the functions of both the input remote station 4 and the output remote station 5, and has a remote station input/output part having both the configurations of the remote station input part 40 and the remote station output part 50, then the configuration being substantially the same as the remote station input part 40 and the remote station output part 50, illustration and description thereof are omitted.

### <Procedure for transmission of the instruction data>

A procedure for transmitting the instruction data will be described with reference to FIG. 1. As shown in FIG 1A, in the case where the entire changeable range of the control/monitoring data range is used for data transmission from the input remote station 4 and the input/output remote station 6, the master station 2 transmits instruction data indicating the second state to all of the remote stations 4, 5, and 6 using the management data range for each frame. In the input remote station 4 and the input/output remote station 6 those having received the instruction data, the V range, which is a changeable range, is used for transmission from the own station.

As shown in FIG. 1B, in the case where the entire changeable range of the control/monitoring data range is used for data transmission from the master station 2, the master station 2 transmits instruction data indicating the first state to all of the remote stations 4, 5, and 6 using the management data range for each frame. In the output remote station 5 and the input/output remote station 6 those having received the instruction data, the data in the V range is extracted as the control data from the master station 2.

As shown in FIG. 1C, a part of the changeable range of the control/monitoring data range can be used for data transmission from the master station 2, and another parts can be used for data transmission from the input remote station 4 and the input/output remote station 6. In this case, it is assumed that the changeable range activation means 61 of the remote stations 4, 5, and 6 has a function of storing instruction data. Then, at a predetermined timing such as at the time of system startup, the master station 2 transmits instruction data indicating the first state by specifying an address to each of the output remote stations 5 using the management data range, and transmits instruction data indicating the second state by specifying an address to each of the input remote stations 4. For the input/output remote station 6, either the instruction data indicating the first state or the instruction data indicating the second state is transmitted by specifying the address of the corresponding input/output remote station 6 in accordance with the required use.

**In** the case where the designated address matches the own address, the input remote stations 4, 5, and 6 receive the instruction data and store the instruction data, the input remote station 4 uses the V range for transmission from the own station, and the output remote station 5 extracts the data of the V range as the control data from the master station 2. Further, the input/output remote station 6 corresponds to the instruction data, and uses the V range for transmission from the own station, or extracts the data of the V range as the control data from the master station 2.

The state of the changeable range, that is, whether the first state or the second state is determined in accordance with the number of control data ranges and the number of monitoring data ranges required for transmitting and receiving data between the master station 2 and the remote stations 4, 5, and 6. Then, the number of required control data ranges and the number of monitoring data ranges are determined in the system design stage, but the system configuration may be changed depending on the device in consideration of the way of use. In such a case, the state of the changeable range is preferably determined according to the current system configuration.

In this embodiment, it is assumed that the master station 2 uses the management data range to specify an address for each of the remote stations 4, 5, and 6, and collects information relates to data to be received from the master station 2 and data to be transmitted to the master station 2 for each of the remote stations 4, 5, and 6. Then, basing on the collected information, it is possible to determine the changeable range of each of the data pulses as either the first state or the second state.

In this embodiment, the data values in the V range, the i range, the f range, and the P range are extracted basing on the voltage levels detected at predetermined timings in the range. That is, the voltage level of the transmission signal is made to correspond to the data value, so that the data is transmitted and received, but in the P range including the rising edge of the high period, the rising timing of the high period may be made to correspond to the data value, so that the data may be transmitted and received.

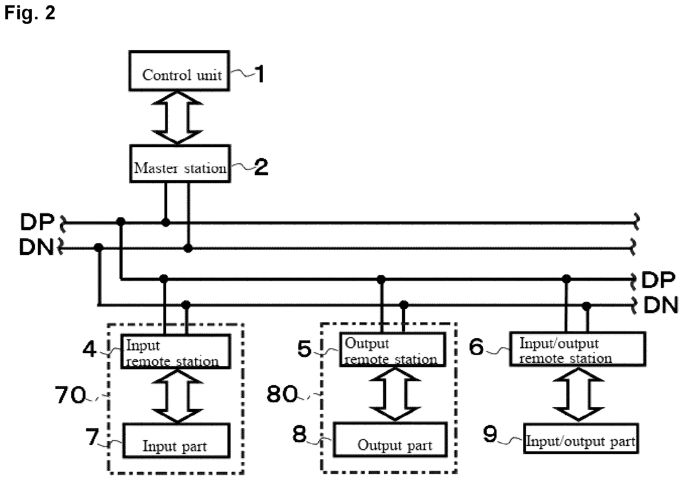

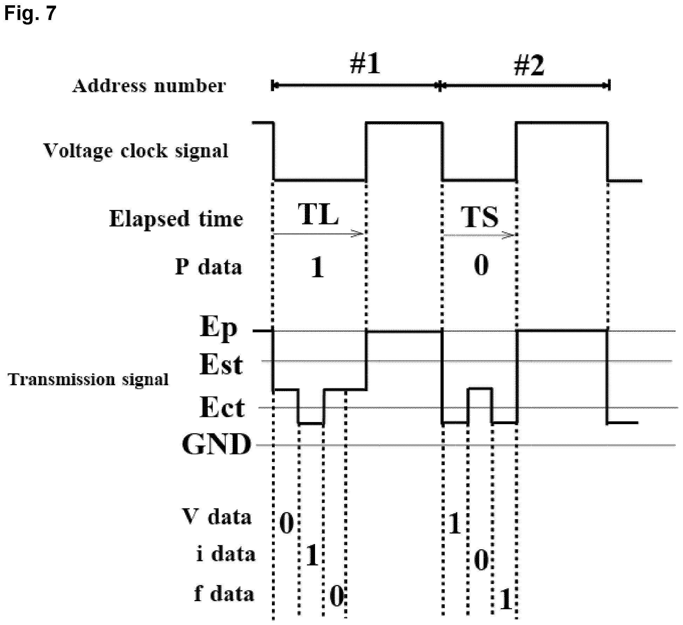

FIG 7 is a time chart of a transmission signal according to an embodiment wherein data is transmitted and received by causing the rising timing of the high period to correspond to the data value in the P range. In the description of the embodiment shown in FIG. 7, substantially the same parts as those of the embodiments shown in FIGS. 1 to 6 are denoted by the same reference numerals, and the description thereof will be omitted or simplified.

In the embodiment shown in FIG 7, the rising timing of the high period in the P range corresponds to the data value. Note that the rising timing of the high period in the P range can be obtained by measuring the elapsed time from the falling of the high period to the rising.

In FIG 7, an elapsed time TL longer than a predetermined threshold indicates a data value "1" corresponding to a smaller time width, and an elapsed time TS shorter than the predetermined threshold indicates a data value "0" corresponding to a larger time width. There is no restriction on the correspondence between the rising timing of the high period and the data value, and it may be appropriately set according to the use state.

### DESCRIPTION OF REFERENCE NUMERALAS

- 1: Control unit
- 2: Master station
- 4: Input remote station
- 5: Output remote station
- 6: Input/output remote station
- 7: Input part
- 8: Output part
- 9: Input/output part
- 11: Management determining part
- 12: Input/output unit
- 21: Output data part
- 22: Management data part
- 23: Timing generating part
- 24: Master station output part
- 25: Master station input part
- 26: Input data part
- 31: Oscillation circuit (OSC)
- 32: Timing generating means
- 33: Control data generating means
- 34: Line driver
- 35: Line receiver
- 36: Monitoring data extracting means
- 40: Remote station input part
- 41: Transmission receiving means
- 42: Management control data extracting means
- 43: Address extracting means
- 44: Address setting means
- 45: Management monitoring data transmission means
- 46: Input means
- 47: Monitoring data transmission means
- 48: Remote station line receiver
- 49: Remote station line driver
- 50: Remote station output part
- 51: Control data extracting means
- 52: Output means
- 61: changeable range activation means
- 70: Input part integrated remote station
- 80: Output part integrated remote station

## Claims

1. A control and monitoring signal transmission system comprising a master station that transmits and receives data to and from a control part, and a plurality of remote stations that transmit and receive data to and from the master station by a transmission synchronization method via a common transmission line, wherein:
transmitting and receiving data between the master station and the remote stations is performed by superimposing data on a frame repeatedly transmitted from the master station,
a transmission clock signal for synchronizing the master station and the remote station is composed of a plurality of clock pulses, each of the clock pulses has a data pulse used for data transmission of the master station and the remote station,
the data pulse is allocated to each of the remote stations,
for each of the remote stations, a numerical value as an address for obtaining the timing of the data pulse allocated to the own station is set,
the data pulse is time-divided into a plurality of ranges, and at least one of the ranges is a changeable range that can be used for both data transmission from the master station and data transmission from the remote station.

2. A control and monitoring signal transmission system according to claim 1, wherein a management data range wherein all of the remote stations can be used is provided in the frame, and the master station transmits, using the management data range, instruction data indicating one of a first state wherein the changeable range is used for data transmission from the master station and a second state wherein the changeable range is used for data transmission from the remote station, and the remote station transmits and receives data corresponding to the instruction data.

3. A control and monitoring signal transmission system according to claim 1, wherein a management data region wherein all of the remote stations can be used is provided in the frame, the master station transmits instruction data indicating one of a first state wherein the changeable range is used for data transmission from the master station and a second state wherein the changeable range is used for data transmission from the remote station by specifying one of the addresses using the management data range, and the remote station transmits and receives data corresponding to the instruction data in case where the specified address matches the own address.

4. A control and monitoring signal transmission system according to claim 1, wherein a management data range wherein all of the remote stations can be used is provided in the frame, the master station collects information on data to be received by the remote station from the master station and data to be transmitted to the master station by specifying the address for each of the remote stations using the management data range, basing on the information, determines either of a first state wherein the changeable range is used for data transmission from the master station or a second state wherein the changeable range is used for data transmission from the remote station for each of the changeable range of the data pulses, transmits instruction data indicating either the first state or the second state by specifying the address using the management data region, and the remote station transmits and receives data corresponding to the instruction data in case where the designated address matches the own address.
